# EUROPÄISCHE PATENTSCHRIFT

(11) **EP 3 067 222 B1**
(45) Veröffentlichungstag und Bekanntmachung des Hinweises auf die Patenterteilung: **18.09.2019**
(21) Anmeldenummer: 16159178.9
(22) Anmeldetag: 08.03.2016
(51) Int. Cl.: B60B 1/00, B60B 21/10, B60B 21/02

(54) **FELGE FÜR EIN MOUNTAINBIKE**
RIM FOR A MOUNTAIN BIKE
JANTE DE VELO TOUT-TERRAIN

(30) Priorität: 10.03.2015 DE 102015103508
(43) Veröffentlichungstag der Anmeldung: 14.09.2016
(73) Patentinhaber: DT Swiss AG, 2504 Biel (CH)
(72) Erfinder: Tschanz, Andreas, 2504 Biel (CH); Walthert, Martin, CH-3270 Aarberg (CH)
(74) Vertreter: BSB Patentanwälte Schütte & Engelen Partnerschaft mbB

(56) Entgegenhaltungen:
- EP-A1- 0 026 514
- EP-A1- 2 228 235
- DE-A1-102007 052 674
- FR-A1- 2 474 403
- FR-A3- 2 945 473

## Beschreibung

Die vorliegende Erfindung betrifft eine Felge für ein wenigstens teilweise muskelbetriebenes Mountainbike sowie ein Laufrad mit einer solchen Felge. Eine solche Felge umfasst einen Felgenkörper mit einem Felgenbett, einem Felgenboden und zwei seitlichen Felgenflanken und weist eine Hohlkammer auf, die von dem Felgenboden, dem Felgenbett und den zwei seitlichen Felgenflanken begrenzt wird.

Derartige doppelwandige Felgen, bei denen zwischen dem Felgenboden und dem Felgenbett eine Hohlkammer vorgesehen ist, sind im Stand der Technik bekannt. Solche Felgen ermöglichen eine hohe Stabilität und Zuverlässigkeit, beispielsweise für den Einsatz bei Rennrädern, aber auch bei Mountainbikes. Beispielsweise ist in der EP 2 228 235 A1 eine Hohlkammerfelge gezeigt, bei der ein radial innerer Felgenboden zweilagig ausgeführt ist. Die Lagen bestehen dabei aus unterschiedlichen Materialien.

Neben Hohlkammerfelgen sind auch einwandige Felgen bzw. Kastenfelgen bekannt geworden. Beispielsweise zeigt die EP 0 026 514 A1 eine Kastenfelge, welche zur Verstärkung mit zwischen den Flanken verlaufenden Stegen ausgestattet ist. Eine Hohlkammerfelge nach dem Stand der Technik wird in DE 10 2007 052674 A1 offenbart.

Rennräder weisen meist eine relativ geringe Maulweite zwischen den Felgenhörnern auf, um über schmale Reifen einen geringen Laufwiderstand und einen geringen Windwiderstand zu ermöglichen. Bei Mountainbikes wiederum werden breitere Reifen und somit auch breitere Felgen verwendet. Die Reifen sind bei Mountainbikes mit einem ausgeprägten Profil versehen, um beispielsweise beim Beschleunigen die nötige Bodenhaftung zu gewährleisten.

Für Mountainbikes werden zunehmend Reifen und somit auch Felgen mit größerer Breite eingesetzt. Während bei Rennrädern oftmals Maulweiten kleiner 20 mm üblich sind, beträgt die Maulbreite bei Felgen für Mountainbikes oftmals 30 mm und sogar 40 mm und mehr.

Mit zunehmender Felgenbreite steigt das Gesamtgewicht erheblich an. Deshalb werden in jüngerer Zeit Mountainbikefelgen mit großer Felgenbreite oftmals einwandig hergestellt, wodurch ein beträchtlicher Gewichtsanteil eingespart werden kann.

Zudem ist es bei derartigen Felgen für Mountainbikes bekannt geworden, großflächige Bereiche auszustanzen, sodass von der einwandigen Felge nur noch eine fachwerkartige Struktur zum Tragen des Reifens verbleibt. Da bei Mountainbikes der Betriebsdruck in der Regel relativ gering ist, ist auch die Belastung auf die Fachwerkstruktur relativ gering.

Nachteilig bei derartigen Felgen ist aber, dass der Einsatz sogenannter Tubeless-Reifen nicht zuverlässig möglich ist, ohne weitere Vorkehrungen zu treffen, da die an der einfachen Felgenwandung angebrachten Speichennippel im laufenden Betrieb mit dem Tubeless-Reifen interagieren können, was gegebenenfalls zu Defekten führen kann.

Es ist deshalb die Aufgabe der vorliegenden Erfindung, eine stabile und leichte Felge für ein Mountainbike zur Verfügung zu stellen, womit insbesondere auch ein Tubeless-Betrieb ermöglicht wird.

Diese Aufgabe wird gelöst durch eine Felge mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Felge ist für ein wenigstens teilweise muskelbetriebenes Mountainbike vorgesehen. Die erfindungsgemäße Felge umfasst einen Felgenkörper mit einem Felgenbett, einem Felgenboden und zwei seitlichen Felgenflanken. Weiterhin ist eine Hohlkammereinrichtung mit einer Hohlkammer vorgesehen. Die Hohlkammereinrichtung des Felgenkörpers wird radial nach außen hin im Wesentlichen von dem Felgenbett (insbesondere als äußerer Begrenzungswandung) begrenzt. Seitlich und radial nach innen hin wird die Hohlkammereinrichtung durch eine den Felgenboden und/oder die Felgenflanken umfassende innere Begrenzungswandung begrenzt. Die radial innere Begrenzungswandung bildet abgesehen von den Nippelaufnahmen eine im Wesentlichen geschlossene Innenwandung. Eine Breite des Felgenkörpers ist größer als 30 mm. Das Felgenbett weist eine Mehrzahl an Aussparungen mit einem Flächenanteil von wenigstens 10 % einer Fläche des Felgenbettes auf.

Die erfindungsgemäße Felge hat viele Vorteile, da sie aufgrund der Doppelwand bzw. des doppelwandigen Aufbaus eine hohe Stabilität ermöglicht. Das ist gerade bei dem Einsatz an Mountainbikes vorteilhaft. Gleichzeitig wird durch den hohen Flächenanteil an Aussparungen an dem Felgenbett ein geringes Gesamtgewicht ermöglicht. Durch den doppelwandigen Aufbau wird es ermöglicht, dass ein Speichennippel an dem Felgenboden angeordnet wird, sodass auch leichte und dauerhaft periodische Bewegungen der Speichennippel im Betrieb keinerlei Auswirkungen auf den auf dem Felgenbett positionierten Reifen haben.

Im Sinne der vorliegenden Erfindung kann eine Aussparung beispielsweise als eine Ausnehmung ausgeführt sein. Möglich ist auch, dass die Aussparung schon in dem zur Herstellung der Felge verwendeten Profil enthalten ist. Die Aussparung kann auch gebohrt, geätzt oder gefräst werden. Möglich ist eine spannende oder chemische Herstellung. Eine Aussparung kann auch durch den Einsatz von Laser oder von Wasserstrahlen oder dergleichen hergestellt werden. Eine Aussparung kann durchgehend sein und einen Durchbruch bilden oder es kann nur ein Teil der Wandung ausgenommen werden, sodass ein anderer Teil der Wandung stehen bleibt. Besonders bevorzugt sind Aussparungen (wenigstens zum Teil) jeweils als Durchbruch oder Durchgangsloch ausgebildet.

Die Hohlkammereinrichtung weist in allen Fällen eine Hohlkammer auf. Möglich ist es auch, dass die Hohlkammereinrichtung zwei oder mehr verschiedene und teilweise oder vollständig voneinander getrennte Hohlkammern umfasst. Besonders bevorzugt weist die Hohlkammereinrichtung genau eine einzige Hohlkammer auf.

Die Hohlkammer wird vorzugsweise von dem Felgenboden und dem Felgenbett und den beiden den Felgenboden jeweils mit dem Felgenbett verbindenden Felgenflanken begrenzt. Dabei begrenzen die Felgenflanken die Hohlkammer wenigstens abschnittsweise seitlich. Es ist auch möglich, dass die Felgenflanken so ausgebildet sind, dass der Felgenboden ein integraler Bestandteil des Felgenflanken ist.

In allen Ausgestaltungen ist es besonders bevorzugt, dass die Felge wenigstens im Wesentlichen nahezu vollständig oder vollständig aus einem Metall und insbesondere einem Leichtmetall oder einer Leichtmetalllegierung besteht. In anderen Ausgestaltungen ist es auch möglich, dass die Felge wenigstens teilweise oder vollständig aus einem Faserverbundwerkstoff besteht.

Vorzugsweise ist in der radial inneren Begrenzungswandung über dem Umfang verteilt eine Mehrzahl an Nippelaufnahmen zur Aufnahme von Speichennippeln angeordnet oder ausgebildet. An den Nippelaufnahmen kann jeweils wenigstens ein Speichennippel angeordnet werden, der zur Befestigung einer Speiche dient. Insbesondere sind die Nippelaufnahmen an dem Felgenboden vorgesehen. Möglich ist es aber auch, dass einige Nippelaufnahmen oder ein Teil der Nippelaufnahmen an der einen und/oder der anderen Felgenflanke vorgesehen ist. Besonders bevorzugt sind an dem Felgenbett jedenfalls keine Nippelaufnahmen vorgesehen.

In bevorzugten Weiterbildungen sind in dem Felgenbett jeweils ausgerichtet zu den Nippelaufnahmen Nippeldurchführungen vorgesehen, um Speichennippel von außen in die Nippelaufnahmen einführen zu können. Besonders bevorzugt ist jede Nippeldurchführung zur Durchführung wenigstens eines Speichennippels vorgesehen. Jede Nippelaufnahme kann zur Aufnahme von einem oder auch von zwei oder mehr Speichennippeln ausgebildet sein.

Vorteilhafterweise bildet die radial innere Begrenzungswandung abgesehen von den Nippelaufnahmen eine im Wesentlichen geschlossene Innenwandung. Eine solche Ausgestaltung ist besonders vorteilhaft, da die Felge bzw. ein damit ausgerüstetes Laufrad im Betrieb zuverlässig und dauerhaft seine Eigenschaften behält, auch, wenn die Fahrt durch das Gelände führt. Wenn zum Beispiel die radial innere Begrenzungswandung mit Durchbrüchen versehen ist, könnte sich während der Fahrt im Inneren der Felge Schmutz ablagern, sodass sich während des Betriebs die Fahreigenschaften ändern würden.

Bei der erfindungsgemäßen Felge werden solche Veränderungen zuverlässig verhindert, da die innere Begrenzungswandung abgesehen von den Nippelaufnahmen und einer eventuellen Ventildurchführung eine geschlossene Innenwandung bildet. Im Betrieb sind an den Nippelaufnahmen die Speichennippel und an der Ventildurchführung ein Ventil angeordnet, sodass das Innere der Felge bzw. der Hohlraum der Hohlraumeinrichtung zur Umgebung hin abgeschlossen ausgebildet ist.

In besonders bevorzugten Ausgestaltungen sind Felgenhörner vorgesehen, wobei die Felgenhörner insbesondere radial nach außen von dem Felgenbett abstehen oder über das Felgenbett radial nach außen überstehen.

Vorzugsweise gehen die Felgenflanken radial nach außen in die Felgenhörner insbesondere nahtlos und/oder kontinuierlich über.

In bevorzugten Weiterbildungen weist das Felgenbett seitlich benachbart zu den Felgenflanken und insbesondere angrenzend an die Felgenflanken (nach innen hin) jeweils einen Auflageabschnitt für einen Reifen und zwischen den Auflageabschnitten einen Mittelbereich auf. Die Auflageabschnitte erstrecken sich quer zu den Felgenflanken und vorzugsweise etwa senkrecht zu den Felgenflanken axial nach innen hin. Der Mittelbereich bildet vorzugsweise eine Umfangsrille oder bildet eine umfängliche Vertiefung oder weist eine Umfangsrille auf.

In allen Ausgestaltungen sind die Auflageabschnitte vorzugsweise als durchgehend umlaufende Stege ausgebildet, sodass dort der Reifen vorzugsweise vollumfänglich abgestützt wird.

In allen Ausgestaltungen können unrunde und/oder mehreckige und insbesondere 3-eckige, 4-eckige, 5-eckige, 6-eckige und insbesondere etwa rechteckige Aussparungen oder aber auch runde oder abgerundete Aussparungen vorgesehen sein. Besonders bevorzugt sind (mehreckige) Aussparungen mit abgerundeten Ecken. Ein Eckenradius ergibt sich dabei insbesondere durch den Radius eines zur Herstellung der Aussparung verwendeten Fräsers.

Die Aussparungen können jeweils zum Teil oder insgesamt auch als Durchgangsloch ausgebildet sein. Werden Durchgangslöcher als Aussparungen verwendet, so wird wenigstens ein Teil des Felgenbettes durch Aussparungen mit dazwischen angeordneten Stützstegen gebildet. Dabei ist es möglich, dass das Felgenbett insgesamt und vorzugsweise der Mittelbereich des Felgenbettes durch Aussparungen mit dazwischen angeordneten Stützstegen gebildet wird, wobei es bevorzugt ist, dass die Stützstege fachwerkartig angeordnet sind. Besonders bevorzugt sind in dem (axialen) Mittelbereich des Felgenbettes Aussparungen angeordnet, die sich in Umfangsrichtung periodisch mit Stützstegen abwechseln.

Die Aussparungen bilden keine in Umfangsrichtung durchgängig umlaufende Nut, wie eine Nut zur Aufnahme der Reifenwülste bei der Montage, sondern sind eine zusätzliche Maßnahmen zur Gewichtsreduktion.

Durch Ausgestaltungen, bei denen die Aussparungen eine größere Breite in Umfangsrichtung aufweisen als die Stützstege wird eine besonders hohe Gewichtsreduktion ermöglicht. Dies gilt sowohl für Aussparungen, die als Durchgangslöcher ausgeformt sind als auch bei Aussparungen, bei denen nur ein Teil der Wandung des Felgenbettes ausgenommen ist.

In bevorzugten Weiterbildungen der Erfindung ist an wenigstens einer Aussparung eine Wandstärke des Felgenbettes um wenigstens 20 % geringer als an einem Stützsteg des Felgenbettes insbesondere benachbart zu einer Aussparung. Es ist auch möglich, dass eine Wandstärke des Felgenbettes um 30 % oder 40 % oder 50 % oder 60 % oder 70 % geringer ist als eine Wandstärke eines Stützsteges des Felgenbettes und/oder des umlaufenden Steges des Felgenbettes.

Besonders bevorzugt sind die Wandstärken des Felgenbettes im Bereich der Stützstege und die Wandstärke der umlaufenden Stege gleich oder im Wesentlichen gleich. Abweichungen von +/-10 % oder +/-20 % sind möglich. Insbesondere können die Stützstege in axialer Richtung dicker ausgebildet sein als die umlaufenden Stege, um in dem Mittelbereich die Steifigkeit in radialer Richtung relativ zu erhöhen.

In bevorzugten Weiterbildungen beträgt eine Breite des Felgenkörpers vorzugsweise mehr als das 1,5 fache einer radialen Erstreckung von der Innenoberfläche des Felgenbodens bis zu einer radial äußersten Stelle des Felgenkörpers. Insbesondere ist eine Breite des Felgenkörpers mehr als doppelt so groß wie eine radiale Erstreckung von der Innenoberfläche des Felgenbodens bis zur radial äußersten Stelle des Felgenkörpers bzw. des Felgenhorns. Durch solche Abmessungen wird eine besonders breite Felge definiert. Die Breite des Felgenkörpers ist vorzugsweise größer gleich 30 mm. Besonders bevorzugt ist die Felge breiter als 40 mm.

Eine Maulweite des Felgenkörpers ist vorzugsweise größer als 30 mm und kann vorzugsweise größer als 40 mm betragen. In einer bevorzugten Ausgestaltung beträgt eine Gesamtbreite der Felge mehr als 55 mm, während eine Höhe der Felge von der Innenoberfläche des Felgenbodens bis zur äußersten Spitze des Felgenhorns kleiner ist als 24 mm. Dabei erstreckt sich die Hohlkammer im Inneren des Felgenkörpers über eine maximale Breite von über 50 mm.

Ein erfindungsgemäßes Laufrad ist mit einer Felge ausgerüstet, wie sie zuvor beschrieben wurde. Weiterhin weist das Laufrad eine Nabe auf, die über eine Mehrzahl an Speichen mit der Felge verbunden ist. Dabei sind die Speichen über in der Hohlkammer der Felge angeordnete Speichennippel befestigt. Das Laufrad ist vorzugsweise mit einem Reifen ausgerüstet, dessen vorgesehener Betriebsdruck 2 bar Überdruck und insbesondere 1,5 bar und vorzugsweise 1,2 bar Überdruck nicht übersteigt. Das Laufrad ist besonders bevorzugt für ein Mountainbike vorgesehen und weist eine axiale Breite von größer 30 mm, insbesondere größer 40 mm und gegebenenfalls größer 50 mm auf.

Insgesamt stellt die Erfindung eine Felge für ein Mountainbike oder dgl. und ein Laufrad mit einer derartigen Felge zur Verfügung. Dabei weist die Felge für eine Mountainbikefelge ein geringes Gewicht auf und ist dennoch hoch belastbar. Der Einsatz von Tubeless-Reifen ist möglich, da die Speichennippel zuverlässig in dem Hohlkammerbereich bzw. in der Hohlkammer des Felgenkörpers aufgenommen sind. Dadurch, dass bei Mountainbikes nur geringe Luftdrücke gefahren werden, wird das Felgenbett nur schwach belastet. Spannungsspitzen und gegebenenfalls mögliche Risse treten aufgrund von Kerbspannungen grundsätzlich eher bei den Speichenlöchern auf, sodass großflächige Aussparungen oder Ausnehmungen im Bereich des Felgenbettes möglich sind, ohne die Stabilität auch bei den typischen Einsatzzwecken von Mountainbikes zu gefährden. Die Felge kann auch bei anderen geeigneten Rädern und Fahrrädern eingesetzt werden.

In allen Ausgestaltungen kann ein Verhältnis von einer Gesamtfläche der Aussparungen auf dem Umfang zu einer Umfangsfläche des Mittelbereichs zwischen den seitlichen umlaufenden Stegen 1/4 und insbesondere 1/3 und vorzugsweise 1/2 und besonders bevorzugt 1/1 übersteigen. Ein Verhältnis von einer Gesamtfläche der Aussparungen auf dem Umfang zu einer Umfangsfläche des Mittelbereichs zwischen den seitlichen umlaufenden Stegen kann auch größer als 2:1 sein und 3:1 erreichen und überschreiten. Das bedeutet, dass entlang einer Umfangslinie in dem Mittelbereich mehr als 1/3 der Länge Aussparungen angeordnet sind. Wenigstens 1/20 und vorzugsweise wenigstens 1/10 der Länge einer Umfangslinie besteht aus Stützstegen zwischen den Aussparungen.

In allen Weiterbildungen kann der Flächenanteil der Aussparungen an einer Gesamtumfangsfläche des Felgenbettes 1/4 und insbesondere 1/3 und vorzugsweise 1/2 und besonders bevorzugt 1:1 erreichen und überschreiten.

Es ist möglich, dass separate Nippeldurchführungen an dem Felgenbett erhalten bleiben. Möglich ist es aber auch, dass die Nippeldurchführungen Teil von Aussparungen werden, wenn das Felgenbett dort im Bereich der Aussparungen beispielsweise entfernt wird.

Wird eine fachwerkartige Struktur im Bereich des Felgenbettes eingesetzt, so werden dort als Stützstege praktisch Zugstäbe eingesetzt, die die Druckbelastungen des Reifens optimal aufnehmen. Durch die großflächigen Aussparungen wird eine problemlose und optimale Zugänglichkeit zu den Speichennippeln ermöglicht. Großflächige Aussparungen ermöglichen es weiterhin, die Wandstärke in den Querstreben des Felgenbettes ohne besondere Auswirkungen auf das Gesamtgewicht zu erhöhen.

Die Aussparungen können für den Einsatz von Tubeless-Reifen mit einem z. B. elastischem Abdeckungsband und insbesondere einem Standard-Abdeckungsband abgedeckt werden, da ein solches Abdeckband den geringen Drücken auch bei relativ großflächigen Aussparungen Stand hält. Das gilt erst recht, wenn die Aussparungen nur als Ausnehmungen ausgebildet sind und ein Teil der Wandung erhalten bleibt. Ein solches Abdeckungsband kann Bestandteil der Felge und/oder eines Laufrades sein.

Die Übergänge von den als Durchgangsöffnungen ausgebildeten Aussparungen zu den Stützstegen und/oder die Übergänge von Aussparungen mit reduzierten Wandstärken zu Stützstegen können beliebig scharfkantig oder auch beliebig fließend vorgesehen sein. Es ist möglich, dass die Übergänge über eine Stufe oder mehrere Stufen erfolgen. Es ist auch möglich, dass ein gradueller und/oder kontinuierlicher Übergang zwischen einer Aussparung und einem Stützsteg erfolgt.

In allen Ausgestaltungen ist es bevorzugt, dass auf der radialen Innenseite eine im Wesentlichen durchgängige Wandung ohne Stufen ausgebildet ist, wenn nicht-durchgehende Aussparungen vorgesehen sind. Ausnehmungen sind in diesen Ausgestaltungen vorzugsweise radial nach außen geöffnet ausgebildet.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Figur 1: eine schematische Seitenansicht eines Mountainbikes;
- Figur 2: eine schematische Vorderansicht einer erfindungsgemäßen Felge;
- Figur 3: die Felge nach Fig. 2 in einer perspektivischen Ansicht;
- Figur 4: einen Querschnitt durch die Felge nach Figur 2;
- Figur 5a-c: verschiedene Ausgestaltungen einer erfindungsgemäßen Felge;
- Figur 6: ein weiteres Ausführungsbeispiel einer Vorderansicht einer erfindungsgemäßen Felge;
- Figur 7: die Felge nach Fig. 6 im Schnitt;
- Figur 8: ein vergrößertes Detail aus Fig. 7;
- Figur 9: ein weiteres Ausführungsbeispiel einer Vorderansicht einer erfindungsgemäßen Felge;
- Figur 10: die Felge nach Fig. 9 im Schnitt; und
- Figur 11: ein vergrößertes Detail aus Fig. 10.

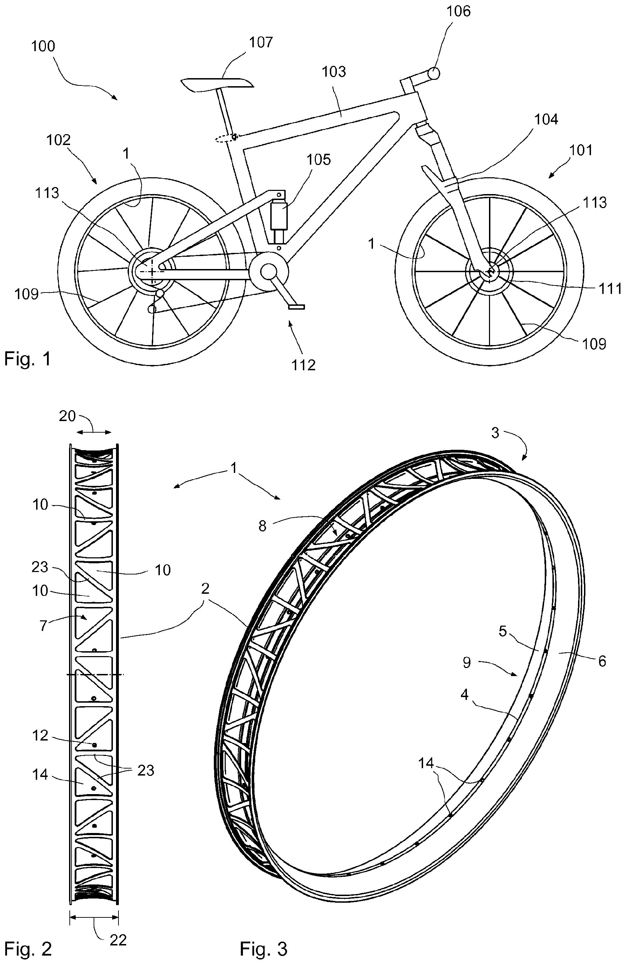

Figur 1 zeigt eine schematische Darstellung eines Mountainbikes als Fahrrad bzw. Zweirad 100. Das Mountainbike 100 weist zwei Laufräder 101, 102 auf, nämlich ein Vorderrad 101 und ein Hinterrad 102. Weiterhin sind ein Rahmen 103, eine Federgabel 104, einen Hinterraddämpfer 105, ein Lenker 106 und ein Sattel 107 vorgesehen. Als Antrieb 112 sind Pedale und hier eine Kettenschaltung vorgesehen. Das Vorderrad 101 und das Hinterrad 102 sind jeweils an Ausfallenden 113 an der Gabel 104 bzw. dem Rahmen 103 befestigt.

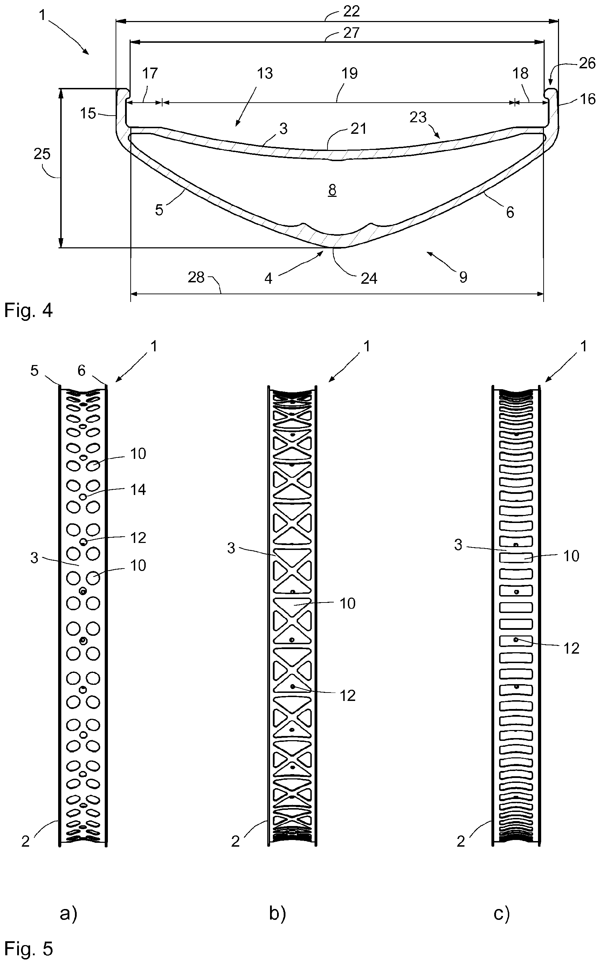

Figur 2 zeigt eine schematische Vorderansicht einer erfindungsgemäßen Felge 1. Figur 3 zeigt eine perspektivische Ansicht der Felge 1 aus Figur 2 und Figur 4 stellt einen zugehörigen Querschnitt durch die Felge 1 dar.

Die Felge 1 weist einen Felgenkörper 2 auf, an dem eine Hohlkammereinrichtung 7 mit hier genau einer Hohlkammer 8 vorgesehen ist. Die Hohlkammer 8 wird radial nach innen und zur Seite durch eine hier einstückige innere Begrenzungswandung 9 begrenzt, die aus dem Felgenboden 4 und den Felgenflanken 5 und 6 besteht.

Radial nach außen wird die Hohlkammer 8 durch das Felgenbett 3 begrenzt, in welchem hier großflächige Aussparungen 10 vorgesehen sind. Die Aussparungen 10 sind hier etwa dreieckförmig ausgebildet und weisen abgerundete Ecken auf. Zwischen den einzelnen Aussparungen 10 sind Stützstege 23 vorgesehen, die den tragenden Teil des Felgenbettes 3 bilden.

Im Felgenboden 4 sind Nippelaufnahmen 12 ausgebildet, die zur Aufnahme von hier nicht abgebildeten und in der Regel konventionellen Speichennippeln dienen. Bei der Montage werden die Speichennippel hier von außen durch die Aussparungen 10 in die Nippelaufnahmen 12 eingeführt. Dann ragt der Nippelkörper radial nach innen durch den Felgenboden 4 hindurch und der Nippelkopf des Speichennippels wird in der Nippelaufnahme im Inneren der Hohlkammer 8 gehalten. Dabei ist es möglich, dass der Nippelkopf und/oder die Nippelaufnahme jeweils halbkugelförmig ausgebildet sind, um eine winkelmäßige Ausrichtung eines Speichennippels in der Nippelaufnahme 12 zu ermöglichen. Möglich ist es auch, dass eine konvexe Außenoberfläche des Speichennippelkopfes in Kontakt mit einer konvexen Fläche der Nippelaufnahme ist, um eine reibungsarme Ausrichtung des Speichennippelkopfs zu gewährleisten.

Die Gesamtbreite 22 des Felgenkörpers 2 in seitlicher Richtung 20 ist hier deutlich größer als eine radiale Dicke 25 des Felgenkörpers 2 zwischen dem Felgenboden 4 und der radial äußersten Stelle der Felgenflanken 5, 6 bzw. der Felgenhörner 15, 16.

Figur 4 zeigt einen Querschnitt durch die Felge 1 gemäß der Figuren 2 und 3. Die Hohlkammer 8 befindet sich zwischen der inneren Umfangswandung 9 und der äußeren Umfangswandung, die durch das Felgenbett 3 gebildet wird. Die innere Umfangswandung 9 wird durch den Felgenboden 4 und die sich beidseits anschließenden Felgenflanken 5 und 6 gebildet. Die innere Umfangswandung 9 stellt eine geschlossene Wandung dar, die nur an den Nippelaufnahmen durchbrochen ist. Die Felgenflanken 5 und 6 gehen jeweils in ein Felgenhorn 15 bzw. 16 nahtlos über.

Eine Gesamtbreite 22 der Felge 1 ist hier mehr als doppelt so groß wie eine radiale Erstreckung 25 zwischen der inneren Umfangsfläche 24 des Felgenbodens 4 und der radial äußersten Stelle 26 an den Felgenhörnern 15 bzw. 16. Die Maulweite 27 ist etwas geringer und entspricht etwa der Breite der Hohlkammer 8.

Das Felgenbett 3 umfasst in seitlicher Richtung 20 hier drei Abschnitte, nämlich benachbart zu dem Felgenhorn 15 einen Auflageabschnitt 17 und benachbart zu dem Felgenhorn 16 einen Auflageabschnitt 18. Zwischen den Auflageabschnitten 17 und 18 erstreckt sich ein Mittelbereich 19.

Während die Auflageabschnitte 17 und 18 quer zu den Felgenhörnern 15 und 16 und hier im Wesentlichen senkrecht zu den Felgenhörnern 15 und 16 ausgerichtet sind, bildet der Mittelbereich 19 eine Umfangsrille oder eine Vertiefung entlang des Umfangs. Die Stützstege 23 und die Aussparungen 10 befinden sich hier im Ausführungsbeispiel nur im Mittelbereich 19. Die Auflageabschnitte 17 und 18 sind als umlaufende Stege zur Auflage eines Reifens ausgebildet. Dort befinden sich keine Aussparungen. Möglich wäre es aber auch, dort Aussparungen wenigstens bis zu der möglichen Breite 28 vorzusehen. Vorzugsweise bleiben wenigstens minimale umlaufende Stege 17 und 18 direkt neben den Felgenhörnern 15 und 16 übrig, um eine umlaufende Auflage eines Reifens zu ermöglichen. Eine axiale Breite der umlaufenden Stege liegt vorzugsweise zwischen der einfachen und zehnfachen Wandstärke der Felgenhörner und insbesondere zwischen 2 mm und 10 mm.

In Figur 5 sind drei Varianten a), b) und c) als mögliche Ausgestaltungen von Felgen 1 abgebildet. Dabei zeigt Figur 5a eine Felge 1, bei der hier kreisförmige Ausnehmungen 10 beispielsweise als Bohrungen in das Felgenbett 3 eingebracht sind. Separat davon sind Nippeldurchführungen 14 vorgesehen, die sich zur Durchführung von Speichennippeln eignen, um die Speichennippel in den Nippelaufnahmen 12 in dem Felgenboden 4 bei der Montage anzuordnen.

In Figur 5b ist eine Variante dargestellt, bei der in dem Felgenbett 3 der Felge 1 sich kreuzende Stützstege 23 vorgesehen sind, bzw. es sind im Wesentlichen dreiecksförmige Aussparungen 10 vorgesehen, sodass kreuzartige Stützstege 23 stehen bleiben.

Figur 5c zeigt eine Variante mit über dem Umfang der Felge 1 regelmäßig verteilt angeordneten Aussparungen 10, die gleichzeitig auch zur Durchführung von Speichennippeln dienen, um die Speichennippel in der zugehörigen Nippelaufnahme 12 zu platzieren.

Sowohl in dem Ausführungsbeispiel der Felge 1 nach den Figuren 2-4 als auch in dem in Figur 5 dargestellten Ausführungsbeispiel beträgt ein Flächenanteil der Aussparungen 10 an der Gesamtfläche 13 (vgl. Figur 4) des Felgenbettes 3 mehr als 10 %. Vorzugsweise ist der Flächenanteil >20 % und erreicht vorzugsweise 30 % oder 40 %. Der Anteil kann insbesondere bei fachwerkartigen Strukturen auch 50 %, 60 %, 70% und weit mehr erreichen.

In dem Ausführungsbeispiel nach Figur 5c bestimmt sich der Flächenanteil über die gesamte Summe der Flächen der Aussparungen 10 relativ zu der Gesamtfläche des Felgenbettes 3, welches sich näherungsweise aus dem seitlichen Innenabstand der Felgenhörner 15 und 16 multipliziert mit dem Umfang des Felgenbettes 3 ergibt. Der Flächenanteil der Aussparungen 10 an der gesamten Umfangsfläche beträgt wie auch im Ausführungsbeispiel nach Fig. 5b oder Fig. 2 mehr als 40% und insbesondere mehr als 50%. In Umfangsrichtung beträgt in dem Mittelbereich 19 ein Längenanteil der Stützstege von dem Gesamtumfang vorzugsweise mehr als 3% und insbesondere mehr als 5% und kann mehr als 10% betragen. Der Anteil ist vorzugsweise kleiner 70% und insbesondere kleiner 50%.

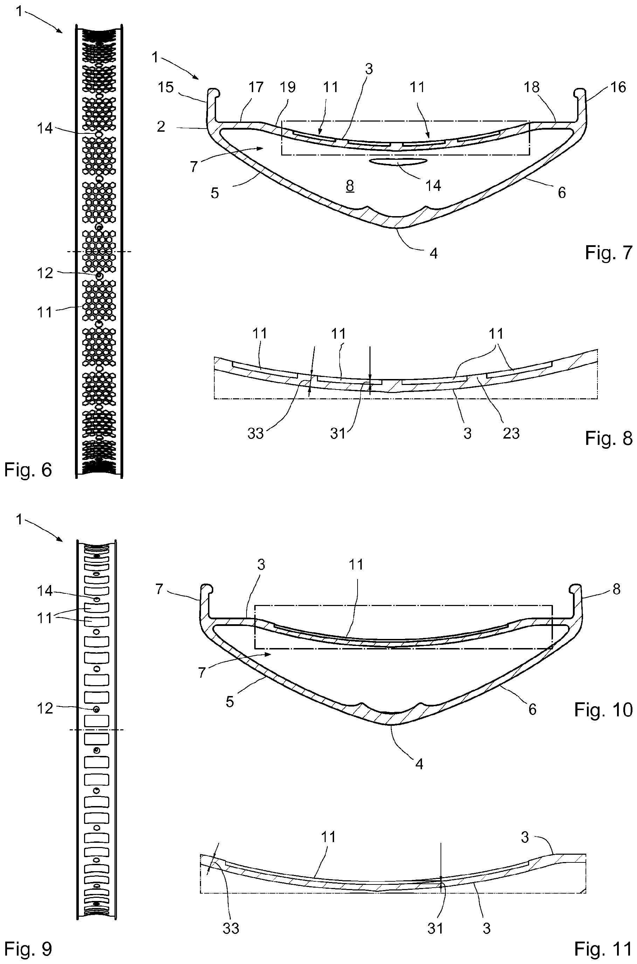

Mit Bezug auf die Figuren 6-8 wird ein weiteres Ausführungsbeispiel einer erfindungsgemäßen Felge 1 erläutert, wobei hier Aussparungen 11 vorgesehen sind, an denen die Wandstärke des Felgenbettes 3 nur reduziert ist, aber keine Durchgangslöcher vorliegen.

Auch hier weist der Felgenkörper 2 eine Hohlkammer 8 einer Hohlkammereinrichtung 7 auf. Die Hohlkammer 8 wird radial nach innen durch eine innere Begrenzungswandung 9 begrenzt, die aus den Felgenflanken 5 und 6 und dem Felgenboden 4 gebildet wird. Nach außen hin wird die Hohlkammer 8 durch das Felgenbett 3 begrenzt, welches sich hier in seitlicher Richtung 20 aus den seitlichen Auflageabschnitten 17 und 18 benachbart zu den Felgenhörnern 15 und 16 und einem Mittelbereich 19 zusammensetzt. Wie auch in den anderen Ausführungsbeispielen beträgt ein Anteil der Breite des Mittelbereichs 19 mehr als 60% der Breite der Felge.

In den Auflageabschnitten 17 und 18 sind hier umlaufende Stege ausgebildet, an denen eine über dem Umfang konstante Wandstärke vorliegt. Im Mittelbereich 19 weist das Felgenbett Aussparungen 11 und in regelmäßigen Abständen Nippeldurchführungen 14 auf. Die Querschnittsabmessungen der Aussparungen 11 und der Nippeldurchführungen 14 können dabei gleich oder unterschiedlich sein. An den Nippeldurchführungen 14 sind jedenfalls Durchgangslöcher vorgesehen, während die hier dargestellten Aussparungen 11 nur einen Teil der Felgenwandung aussparen und somit das Gewicht reduzieren.

Möglich ist es auch, dass sowohl Aussparungen 10 als auch Aussparungen 11 vorgesehen sind, wobei die Aussparungen 10 als Durchgangslöcher und die Aussparungen 11 als Ausnehmungen in dem Felgenbett vorgesehen sind, wobei ein Teil der Wandung des Felgenbettes 3 nur an den Aussparungen 11 stehen bleibt.

Wie in Figur 8 dargestellt, die den strichpunktierten Ausschnitt aus Figur 7 vergrößert zeigt, wird die reguläre Stegdicke 33 eines Stützsteges 23 bzw. des Felgenbettes 3 um die Tiefe 31 der Aussparung 11 reduziert. Hier im Ausführungsbeispiel kann die Stegdicke 33 beispielsweise 1,2 mm betragen, während die Tiefe der Aussparungen 11 ungefähr 0,5 mm beträgt. Möglich ist es aber auch, die Tiefe 11 zu vergrößern und somit die Felgenbettdicke lokal weiter zu verringern.

In den Figuren 9-11 ist noch ein Ausführungsbeispiel einer erfindungsgemäßen Felge 1 dargestellt, wobei Figur 9 wiederum eine Vorderansicht, Figur 10 einen Querschnitt durch die Felge 1 und Figur 11 den strichpunktierten Ausschnitt aus Figur 10 vergrößert zeigt.

Im Unterschied zu dem Ausführungsbeispiel nach den Figuren 6-8 sind im Ausführungsbeispiel gemäß der Figur 9-11 im Wesentlichen rechteckige Aussparungen 11 vorgesehen, an denen eine Stegdicke 33 bzw. Dicke des Felgenbettes 3 erheblich reduziert ist. Auch im Ausführungsbeispiel nach den Figuren 9-11 ist an den Aussparungen 11 jeweils nur ein Teil der Wandstärke weggenommen, sodass das Felgenbett 3 eine durchgehende Wandung bildet, die nur von den Nippeldurchführungen 14 und gegebenenfalls einer Ventildurchführung unterbrochen ist. Die Ecken der Aussparungen können z. B. aus fertigungstechnischen Gründen abgerundet sein.

Möglich ist es aber auch hier, Aussparungen 10 gemäß der Figuren 2-5 mit Aussparungen 11 gemäß der Figuren 9 bis 11 oder gemäß der Figuren 6-8 zu kombinieren, sodass einerseits Aussparungen 10 als Durchgangslöcher und andererseits Aussparungen 11 mit reduzierter Wandstärke vorhanden sind.

Auch im Ausführungsbeispiel gemäß der Figuren 9-11 wird die Wandstärke im Bereich der Aussparungen 11 um die Tiefe 31 reduziert, sodass dort statt einer Wandstärke von 1,2 mm nur eine Wandstärke von 0,7 mm verbleibt. Möglich ist auch eine verbleibende Wandstärke von 0,4 mm oder 0,5 mm oder 0,6 mm oder dergleichen mehr.

Im Ausführungsbeispiel gemäß der Figuren 9-11 erstrecken sich die Aussparungen 11 über einen wesentlichen Teil des Mittelbereiches 19. Auch hier sind die Auflageabschnitte 17 und 18 als durchgehende umlaufende Stege mit gleicher Wandstärke ausgebildet.

In allen Ausführungsbeispielen können unterschiedliche Kombinationen von Aussparungen vorgesehen sein. Insbesondere ist es auch möglich, dass der Übergang von Aussparungen 10 oder 11 zu Stützstegen 23 oder zu den seitlichen Auflageabschnitten 17 und 18 stufenweise oder kontinuierlich erfolgt. Es ist möglich, dass auf einer Seite eine stufenartige Änderung der Wandstärke erfolgt, während auf der anderen Seite eine kontinuierliche Änderung der Wandstärke erfolgt, die sich über 1 mm Länge, 5 mm Länge oder über 10 mm Länge oder mehr erstrecken kann.

Die Erfindung ermöglicht eine deutliche Reduzierung des Gewichts einer Felge 1 gegenüber herkömmlichen Felgen, während gleichzeitig eine höhere Stabilität erzielbar ist. Eine erfindungsgemäße Felge 1 eignet sich für den Einsatz von Tubeless-Reifen und gewährleistet eine hohe Qualität.

**Bezugszeichenliste:**

| | | | |
|---|---|---|---|
| 1 | Felge | 107 | Sattel |
| 2 | Felgenkörper | 108 | Nabe |
| 3 | Felgenbett | 109 | Speiche |
| 4 | Felgenboden | 111 | Bremsscheibe |
| 5 | Felgenflanke | 112 | Antrieb |
| 6 | Felgenflanke | 113 | Ausfallende |
| 7 | Hohlkammereinrichtung | | |
| 8 | Hohlkammer | | |
| 9 | Begrenzungswandung | | |
| 10 | Aussparung | | |
| 11 | Aussparung | | |
| 12 | Nippelaufnahme | | |
| 13 | Fläche | | |
| 14 | Nippeldurchführung | | |
| 15 | Felgenhorn | | |
| 16 | Felgenhorn | | |
| 17 | Auflageabschnitt | | |
| 18 | Auflageabschnitt | | |
| 19 | Mittelbereich | | |
| 20 | seitliche Richtung | | |
| 21 | Umfangsrille | | |
| 22 | Breite von 2 | | |
| 23 | Stützsteg | | |
| 24 | Innenoberfläche von 4 | | |
| 25 | radiale Erstreckung | | |
| 26 | radial äußerste Stelle | | |
| 27 | Maulweite | | |
| 28 | mögliche Breite von 10 | | |
| 31 | Tiefe von 11 | | |
| 33 | Stegdicke | | |
| 100 | Fahrrad, Mountainbike | | |
| 101 | Laufrad, Vorderrad | | |
| 102 | Laufrad, Hinterrad | | |
| 103 | Rahmen | | |
| 104 | Gabel | | |
| 105 | Dämpfer | | |
| 106 | Lenker | | |

## Patentansprüche

1. Felge (1) für ein wenigstens teilweise muskelbetriebenes Mountainbike (100) umfassend einen Felgenkörper (2) mit einem Felgenbett (3), einem Felgenboden (4) und zwei seitlichen Felgenflanken (5, 6),
und einer Hohlkammereinrichtung (7) mit einer Hohlkammer (8), wobei die Hohlkammereinrichtung (7) des Felgenkörpers (2) radial nach außen hin von dem Felgenbett (3)
und seitlich und radial nach innen hin durch eine den Felgenboden (4) und/oder die Felgenflanken (5, 6) umfassende innere Begrenzungswandung (9) begrenzt wird, wobei eine Breite (22) des Felgenkörpers (2) größer als 30 mm beträgt,
**dadurch gekennzeichnet,**
**dass** die radial innere Begrenzungswandung (9) abgesehen von den Nippelaufnahmen (12) eine im Wesentlichen geschlossene Innenwandung bildet, und dass das Felgenbett (3) eine Mehrzahl an Aussparungen (10, 11) mit einem Flächenanteil von wenigstens 10% einer Fläche (13) des Felgenbettes (3) aufweist.

2. Felge nach Anspruch 1, wobei in der radial inneren Begrenzungswandung (9) über dem Umfang verteilt eine Mehrzahl an Nippelaufnahmen (12) zur Aufnahme von Speichennippeln (30) angeordnet ist.

3. Felge nach dem vorhergehenden Anspruch, wobei in dem Felgenbett (3) jeweils ausgerichtet zu den Nippelaufnahmen Nippeldurchführungen (14) vorgesehen sind, um Speichennippel (30) von außen in die Nippelaufnahmen (12) einführen zu können.

4. Felge (1) nach einem der vorhergehenden Ansprüche, wobei Felgenhörner (15, 16) vorgesehen sind und wobei die Felgenflanken (5, 6) radial nach außen insbesondere in die Felgenhörner (15, 16) übergehen.

5. Felge (1) nach einem der vorhergehenden Ansprüche, wobei das Felgenbett (3) seitlich benachbart zu den Felgenflanken (5, 6) jeweils einen Auflageabschnitt (17, 18) für einen Reifen und zwischen den Auflageabschnitten (17, 18) einen Mittelbereich (19) aufweist.

6. Felge nach dem vorhergehenden Anspruch, wobei sich die Hohlkammereinrichtung (7) in seitlicher Richtung (20) bis radial unter die Auflageabschnitte (17, 18) erstreckt.

7. Felge nach einem der beiden vorhergehenden Ansprüche, wobei der Mittelbereich (19) eine Umfangsrille (21) bildet.

8. Felge nach einem der drei vorhergehenden Ansprüche, wobei die Auflageabschnitte (17, 18) als durchgehende umlaufende Stege ausgebildet sind.

9. Felge nach einem der vorhergehenden Ansprüche, wobei unrunde und/oder mehreckige Aussparungen (10) vorgesehen sind und/oder wobei wenigstens eine Aussparung (10) abgerundete Ecken aufweist.

10. Felge nach einem der vorhergehenden Ansprüche, wobei wenigstens eine Aussparung (10) als Durchgangsloch ausgebildet ist.

11. Felge nach einem der vorhergehenden Ansprüche, wobei wenigstens ein Teil des Felgenbettes (3) durch Aussparungen mit dazwischen angeordneten Stützstegen gebildet wird.

12. Felge nach dem vorhergehenden Anspruch, wobei an wenigstens einer Aussparung (11) eine Wandstärke des Felgenbettes (3) um wenigstens 20% geringer ist als an einem Stützsteg (23) des Felgenbettes (3).

13. Felge nach einem der vorhergehenden Ansprüche, wobei eine Breite (22) des Felgenkörpers (2) mehr als doppelt so groß wie eine radiale Erstreckung (25) von der Innenoberfläche (24) des Felgenbodens (4) zu einer radial äußersten Stelle (26) des Felgenkörpers (2).

14. Felge nach einem der vorhergehenden Ansprüche, wobei eine Maulweite (27) des Felgenkörpers (2) größer als 30 mm beträgt.

15. Laufrad (101, 102) mit einer Felge (1) nach einem der vorgehenden Ansprüche und mit einer Nabe (108), die über eine Mehrzahl an Speichen (109) mit der Felge (1) verbunden ist, wobei die Speichen (109) über in der Hohlkammer der Felge angeordnete Speichennippel (30) befestigt ist.

## Claims

1. Rim (1) for an at least partially muscle-powered mountain bike comprising a rim body (2) having a rim well (3), a rim base (4) and two lateral rim flanks (5, 6) and a hollow space device (7) with a hollow space (8), wherein the hollow space device (7) of the rim body (2) is radially outwardly limited by the rim well (3) and laterally and radially inwardly, by an inner enclosing wall (9) comprising the rim base (4) and/or the rim flanks (5, 6), wherein a width (22) of the rim body (2) is larger than 30 mm, **characterized in that** the radially inwardly enclosing wall (9) forms an internal wall that is substantially closed, apart from the nipple accommodations (12), and that the rim well (3) comprises a plurality of recesses (10, 11) having a surface proportion of at least 10% of a surface (13) of the rim well (3) .

2. The rim according to claim 1 wherein a plurality of nipple accommodations (12) for receiving spoke nipples (30) is disposed in the radially inwardly enclosing wall (9) distributed over the circumference.

3. The rim according to the preceding claim wherein the rim well (3) is provided with nipple passages (14) aligned with the nipple accommodations to allow to insert spoke nipples (30) from the outside into the nipple accommodations (12).

4. The rim (1) according to any of the preceding claims wherein rim flanges (15, 16) are provided and wherein the rim flanks (5, 6) make a radially outwardly transition to the rim flanges (15, 16) .

5. The rim (1) according to any of the preceding claims wherein the rim well (3) comprises laterally adjacent to the rim flanks (5, 6), a support section (17, 18) each, for a tire and a center region (19) between the support sections (17, 18).

6. The rim according to the preceding claim wherein the hollow space device (7) extends in the lateral direction (20) until radially beneath the support sections (17, 18).

7. The rim according to any of the two preceding claims wherein the center region (19) forms a circumferential groove (21).

8. The rim according to any of the three preceding claims wherein the support sections (17, 18) are configured as continuous, circumferential stems.

9. The rim according to any of the preceding claims wherein non-round and/or polygonal recesses (10) are provided and/or wherein at least one recess (10) has rounded corners.

10. The rim according to any of the preceding claims wherein at least one recess (10) is configured as a through hole.

11. The rim according to any of the preceding claims wherein at least part of the rim well (3) is formed by recesses with support stems disposed in-between.

12. The rim according to the preceding claim wherein at least one recess (11) has a wall thickness of the rim well (3) that is at least 20% less than that of a support stem (23) of the rim well (3) .

13. The rim according to any of the preceding claims wherein a width (22) of the rim body (2) is more than twice the size of a radial extension (25) from the inner surface (24) of the rim base (4) to a radially outermost point (26) of the rim body (2).

14. The rim according to any of the preceding claims wherein a rim width (27) of the rim body (2) is larger than 30 mm.

15. Wheel (101, 102) comprising a rim (1) according to any of the preceding claims and a hub (108) that is connected with the rim (1) through a plurality of spokes (109) wherein the spokes (109) are attached by means of spoke nipples (30) disposed in the hollow space of the rim.

## Revendications

1. Jante (1) pour un vélo tout terrain (100) qui est entraîné au moins en partie par force musculaire, comprenant un corps de jante (2) avec une base de jante (3), un fond de jante (4) et deux flancs de jante latéraux (5, 6),
et un dispositif à chambre creuse (7) ayant une chambre creuse (8),
dans laquelle ledit dispositif à chambre creuse (7) du corps de jante (2) est délimité radialement vers l'extérieur par la base de jante (3) et est délimité latéralement et radialement vers l'intérieur par une paroi de délimitation intérieure (9) comprenant le fond de jante (4) et/ou les flancs de jante (5, 6), dans laquelle une largeur (22) du corps de jante (2) est supérieure à 30 mm,
**caractérisée par le fait**
**que** la paroi de délimitation radialement intérieure (9) forme une paroi intérieure pour l'essentiel fermée, abstraction faite des logements de nipple (12), et que la base de jante (3) présente une pluralité d'évidements (10, 11) avec une fraction de surface d'au moins 10 % d'une surface (13) de la base de jante (3).

2. Jante selon la revendication 1, dans laquelle une pluralité de logements de nipple (12) destinés à recevoir des nipples de rayon (30) sont disposés dans la paroi de délimitation radialement intérieure (9) en étant répartis sur la circonférence.

3. Jante selon la revendication précédente, dans laquelle des passages de nipple (14) sont prévus dans la base de jante (3) en étant alignés chacun par rapport aux logements de nipple, afin de pouvoir introduire des nipples de rayon (30) de l'extérieur dans les logements de nipple (12).

4. Jante (1) selon l'une quelconque des revendications précédentes, dans laquelle des rebords de jante (15, 16) sont prévus et dans laquelle les flancs de jante (5, 6) passent radialement vers l'extérieur en particulier aux rebords de jante (15, 16).

5. Jante (1) selon l'une quelconque des revendications précédentes, dans laquelle la base de jante (3) présente de manière latéralement adjacente aux flancs de jante (5, 6) respectivement une portion d'appui (17, 18) pour un pneu ainsi que, entre lesdites portions d'appui (17, 18), une zone centrale (19).

6. Jante selon la revendication précédente, dans laquelle ledit dispositif à chambre creuse (7) s'étend dans la direction latérale (20) radialement jusque sous les portions de support (17, 18).

7. Jante selon l'une quelconque des deux revendications précédentes, dans laquelle la zone centrale (19) forme une gorge circonférentielle (21).

8. Jante selon l'une quelconque des trois revendications précédentes, dans laquelle les portions d'appui (17, 18) sont réalisées en tant qu'âmes circonférentielles continues.

9. Jante selon l'une quelconque des revendications précédentes, dans laquelle des évidements (10) non circulaires et/ou polygonaux sont prévus et/ou dans laquelle au moins un évidement (10) présente des coins arrondis.

10. Jante selon l'une quelconque des revendications précédentes, dans laquelle au moins un évidement (10) est réalisé en tant que trou traversant.

11. Jante selon l'une quelconque des revendications précédentes, dans laquelle au moins une partie de la base de jante (3) est formée par des évidements avec des âmes de support agencées entre ceux-ci.

12. Jante selon la revendication précédente, dans laquelle, sur au moins un évidement (11), une épaisseur de paroi de la base de jante (3) est d'au moins 20 % inférieure à celle d'une âme de support (23) de la base de jante (3).

13. Jante selon l'une quelconque des revendications précédentes, dans laquelle une largeur (22) du corps de jante (2) est plus de deux fois supérieure à une extension radiale (25) depuis la surface intérieure (24) du fond de jante (4) vers un point radialement le plus extérieur (26) du corps de jante (2).

14. Jante selon l'une quelconque des revendications précédentes, dans laquelle une largeur de jante (27) du corps de jante (2) est supérieure à 30 mm.

15. Vélo sans pédales (101, 102) comprenant une jante (1) selon l'une quelconque des revendications précédentes ainsi qu'un moyeu (108) qui est relié par une pluralité de rayons (109) à la jante (1), dans lequel les rayons (109) sont fixés par l'intermédiaire de nipples de rayon (30) disposés à l'intérieur de la chambre creuse de la jante.
